Europäisches Patentamt

(19) European Patent Office

Office européen des brevets

(11) Veröffentlichungsnummer : **0 147 721**
**B1**

(12) **EUROPÄISCHE PATENTSCHRIFT**

(45) Veröffentlichungstag der Patentschrift :
17.05.89

(21) Anmeldenummer : 84115181.4

(22) Anmeldetag : 11.12.84

(51) Int. Cl.⁴ : **B 01 D 53/00** .

(54) Verfahren zur Abscheidung gasförmiger organischer Schadstoffe, welche auch in Spuren vorliegen können, aus Abgasen durch biologische Oxidation mittels Bakterien.

(30) Priorität : 20.12.83 DE 3345944

(43) Veröffentlichungstag der Anmeldung :
10.07.85 Patentblatt 85/28

(45) Bekanntmachung des Hinweises auf die Patenterteilung : 17.05.89 Patentblatt 89/20

(84) Benannte Vertragsstaaten :
AT CH LI NL

(56) Entgegenhaltungen :
EP--A-- 0 094 573
EP--A-- 0 100 024
DE--A-- 3 227 375

(73) Patentinhaber : DECHEMA Deutsche Gesellschaft für chemisches Apparatewesen e.V.
Postfach 97 01 46
D-6000 Frankfurt 97 (DE)

(72) Erfinder : Kirchner, Kurt, Dipl.-Chem.
Im Wingert 33
D-6236 Eschborn/Ts. (DE)
Erfinder : Rehm, Hans Jürgen
Ludwig Wolkert-Strasse 17
D-4400 Münster (DE)
Erfinder : Hauk, Gerhard Dipl.-Ing.
Grundhofstrasse 29
D-6000 Frankfurt 71 (DE)

(74) Vertreter : Wolff, Hans Joachim, Dr.jur. Dipl.-Chem. et al .
Bell, Wolff & Bell Rechtsanwälte Postfach 80 01 40
Adelonstrasse 58
D-6230 Frankfurt am Main 80 (DE)

EP 0 147 721 B1

**Beschreibung**

Die Erfindung betrifft ein Verfahren zur Abscheidung gasförmiger organischer Schadstoffe, welche auch in Spuren vorliegen können, aus Abgasen durch biologische Oxidation mittels Bakterien, wobei man den ein oder mehrere organische Schadstoffe enthaltenden Gasstrom durch eine oder mehrere biologisch aktive Schichten in Rieselbettreaktoren führt und zur Benetzung der an der Oberfläche der Träger fixierten Bakterienkulturen einen Flüssigkeitsstrom während des Betriebes im Gleich- oder Gegenstrom im Kreis fährt.

In der EP-A 0094573 wird ein Verfahren zur Reinigung von Abluft beschrieben, von dem im Oberbegriff des Anspruchs 1 ausgegangen wird.

In vielen industriell-gewerblichen Bereichen fallen Geruchsstoffe sowohl in Produktionsprozessen als auch Abwasserentsorgungsanlagen an. Die Stoffe stellen meist organische Verbindungen, wie Ketone, Aldehyde, niedrige Fettsäuren, chlorierte KW oder Phenole dar, die in extrem geringen Konzentrationen wirksam sind.

Neben ihren meist übel riechenden Eigenschaften können sie gesundheitsschädlich oder toxisch sein und müssen beseitigt werden.

Produktionsgebundene, geruchsbelästigende Abgase fallen häufig als Gemische mit quasikonstanter Zusammensetzung an. Kohler u. a. verweisen in WIb 1/2-83 dazu auf einige typische Produktionsprozesse.

Die am häufigsten angewandten Verfahren zur biologischen Entfernung von Geruchsstoffen aus Abgasen stellen der Biowäscher und der Biofilter dar.

Beim Biowäscher wird der schadstoffhaltige Abgasstrom durch einen Wäscher geleitet, dessen Waschflüssigkeit mit Belebtschlamm angereichert ist, dem sogenannten Absorber, worin die Schadstoffe absorbiert werden. Das mit den Schadstoffen beladene Absorbens muß regeneriert werden, was mit Hilfe von Mikroorganismen außerhalb des Absorbers in einem getrennten Regenerator geschieht.

Der dabei eingesetzte Belebtschlamm enthält eine nicht genauer definierte Population von Mikroorganismen. Da nicht alle Mikroorganismen in der Lage sind, bestimmte Schadstoffe (sofort) abzubauen, sondern einzelne Arten von Mikroorganismen auf bestimmte Schadstoffe spezialisiert sind, ist bei der Betriebsaufnahme eine entsprechende Adaptionsphase notwendig, die in Extremfällen Wochen dauern kann. Das gleiche gilt für die Reaktivierung der Biomasse nach Betriebsunterbrechungen oder -umstellungen.

Außerdem ist die Anwendung von Biowäschern nur möglich, wenn die aus dem Abgas zu entfernenden Schadstoffe mit Wasser auswaschbar sind.

Eine ausführliche Beschreibung des Verfahrens geben M. Gust et al. : Staub-Reinhaltung Luft 39 (1979), S. 308/314 an.

Biofilter werden in M. Gust et al : Staub-Reinhaltung Luft 39 (1979), S. 397/402 beschrieben. Bei Biofilterverfahren wird der Abgasstrom durch natürliche Filterschichten wie Müll, Erde, Kompost, Torf etc., auf denen sich natürlich anhaftende Bakterienkulturen befinden, gereinigt. Der Schadstoff wird im wesentlichen vom Trägermaterial sorbiert und biochemisch umgesetzt.

Ähnlich wie beim Biowäscher muß davon ausgegangen werden, daß in einem frischen Filtermaterial eine Vielzahl unterschiedlicher Mikroorganismenarten in unterschiedlicher Populationsdichte enthalten sind, für den Schadstoffabbau aber nur einige wenige Arten mit entsprechend hoher Populationsdichte erforderlich sind, so daß ebenfalls nach Inbetriebnahme zum Erreichen der vollen Filterleistung eine Anpassungsphase notwendig ist, die Wochen dauern kann. Das gleich gilt für die Reaktivierung der Biomasse nach Betriebsunterbrechungen und -umstellungen. Ferner sind beim Biofilter die Raum-Zeit-Ausbeuten relativ ungünstig und die Druckverluste insbesondere bei längerem Betrieb hoch. Außerdem ist in diesem System bei längerem Betrieb eine wachsende Acidität festzustellen, woraus nur noch eine bedingte Aktivität von säuretoleranten Bakterien (Thiobacilli) folgt. Eine teilweise oder völlige Verminderung der Schadstoffumsetzung kann dadurch hervorgerufen werden. Die Problematik wird auch von R.D. Pomeroy in Journal WPCF, Bd. 59, Nr. 12 (1982) angeführt.

Aus der weitergehenden Abwasserreinigung ist bekannt, daß durch mit Mikroorganismen besiedelte Aktivkohle oder ähnliche adsorptive Substanzen in Spuren auftretende, biologisch schwer abbaubare Substanzen fast vollständig beseitigt werden können.

Dabei erfolgt eine organische C-Umsetzung von 1 g DOC (= abgebauter gelöster organischer Kohlenstoff) pro $m^3$ Aktivkohle (vgl. K. Fischer et al : GWF-Wasser/Abwasser 122 (1981), S. 58/64 ; P. Koppe et al : Gesundheits-Ingenieur 95 (1974), S. 33/35 u. 247/278).

Generell stellen die bisher bekannten biologischen Abgasreinigungsverfahren zur Beseitigung von biologisch abbaubaren Geruchsstoffen sowohl von ökologischer als auch ökonomischer Sicht günstige Möglichkeiten dar.

Jedoch lassen sie eine gezielte Anpassung und Optimierung an bestimmte prozeßgebundene Abgasbestandteile vermissen. Dies könnte jedoch deren Einsatzmöglichkeiten erheblich erweitern.

Für den industriellen Einsatz ist eine größere Flexibilität der Verfahren anzustreben. Außerdem sollten bei größeren Geruchsstoffabscheidegraden (> 90 %) und vereinfachten Prozeßführungen günstigere Raum-Zeit-Ausbeuten erreicht werden. Dies gilt insbesondere gegenüber Biofiltern.

Der Erfindung liegt die Aufgabe zugrunde, ein biologisches Abluftreinigungsverfahren bereitzustellen, mit dessen Hilfe auch kleinste Spuren gasförmiger Schadstoffe auf wirtschaftliche, zuverlässige und effektive Weise abgeschieden werden können und bei dem die den bekannten Verfahren innewohnenden Nachteile weitestgehend beseitigt sind.

Diese Aufgabe wird erfindungsgemäß dadurch gelöst, daß in einem gattungsgemäßen Verfahren die biologisch aktiven Schichten dadurch hergestellt werden, daß ein poröses, gegenüber dem Schadstoff adsorptives Trägermaterial mit höher innerer Oberfläche, ausgewählt aus der Gruppe Aktivkohle, Zeolith und Silicagel mit einer schadstoffspezifischen Suspension einer Bakterienmono- und/oder -mischkultur in Kontakt gebracht wird.

Bei dem erfindungsgemäßen Verfahren werden für die jeweils anfallenden Schadstoffbestandteile geeignete, auf poröses, adsorptives Trägermaterial, wie Aktivkohle, Zeolith oder Silicagel fixierte Bakterienmonokulturen und/oder Mischkulturen eingesetzt. Das Kriterium für das Trägermaterial ist, daß es porös ist, eine hohe innere Oberfläche besitzt, die 500 bis 1 500 m$^2$/g betragen kann und gegenüber den Schadstoffen adsorptiv ist. Unter den genannten Trägermaterialien erwies sich Aktivkohle als besonders geeignet.

Zeolithe, auch als Alumosilikate bezeichnet, sind zusätzlich zur großen Oberfläche und zum hohen Adsorptionsvermögen kristallin, besitzen aufgrund ihrer bestimmten Kristallstruktur eine räumliche Anordnung gleichgebauter Adsorptions-Hohlräume, die über untereinander gleich große Porenöffnungen zugänglich sind und vermögen dadurch als Molekularsieb zu wirken. Aufgrund ihrer Molekularsiebwirkung sind sie selektiv gegenüber Schadstoffen, wodurch bei einsatzbedingter Auswahl der Zeolithe ihre Adsorptionsfähigkeit gegenüber dem zu entfernenden Schadstoff noch weitaus gesteigert werden kann.

Als Bakterienmischkulturen eignet sich z. B. Klärschlamm. Unter « für Schadstoffbestandteile geeignete Bakterienkulturen » versteht man Kulturen, die den jeweiligen Schadstoff als Substrat aufnehmen.

Die biologisch aktiven Schichten werden dadurch hergestellt, daß man das Trägermaterial mit der für den abzubauenden Schadstoff geeigneten Bakteriensuspension in Kontakt bringt. Das Kontaktieren erfolgt durch ein sogenanntes Umströmen des Trägermaterials mit der Bakteriensuspension, d. h. einer Relativbewegung zwischen Solid-Korn und Fluidphase. Vorzugsweise geschieht dies durch Berieseln. Die Kontaktierung soll solange erfolgen, bis ein Zellbeladungsgleichgewicht eingetreten ist. Dies kann etwa zwischen 1 bis 5 Stunden, gewöhnlich bis etwa 3 Stunden, dauern.

Mit dieser Methode kann für beliebig abzubauende Abgasbestandteile ein räumlich getrennter Filter bei Monokulturen mit kompetiver Hemmung oder ein schichtweise belegter Filter in einem Raum bei Monokulturen mit kooperativen Wechselwirkungen präpariert werden. Der Aufbau eines konzentrations- und schadstoffspezifischen und biologisch hochaktiven Filterbetts für beliebig zusammengesetzte Abgase ist dadurch möglich.

Zu den in den mit dem erfindungsgemäßen Verfahren zu reinigenden Abgasen enthaltenen Schadstoffen gehören beispielsweise Propionaldehyd, Butanol, Ethylacetat und Aceton.

Bei dem Reinigungsvorgang ist der Rohgasstrom nur durch die einzelne Filterschicht bzw. die in Reihe geschalteten Filterschichten zu führen. Dabei sind im Gleichoder Gegenstrom die biologisch aktiven Schichten mit Flüssigkeit zu benetzen. Als Flüssigkeit lassen sich mineralhaltiges Wasser, jedoch bevorzugt spezielle Minerallösungen verwenden. Eine geeignete Minerallösung wird in G. Drews : Mikrobiologisches Praktikum, 3. Aufl., Springer-Verlag (1976), Berlin-Heidelberg-New York, beschrieben.

Mit dem erfindungsgemäßen Verfahren lassen sich Schadstoffspuren von bereits 10$^{-3}$ ppm aus Abgasen entfernen.

Bei der Abgasreinigung sind meist sehr große Volumenströme zu behandeln. Damit die Gaswäsche in wirtschaftlich vertretbaren Anlagendimensionen erfolgen kann, muß die Abscheidung der Schadstoffe in möglichst kurzen Zeiten erfolgen.

Es war nicht vorauszusehen, daß die auch in Spuren auftretenden Verunreinigungen in einer befeuchteten mit Bakterienmonokulturen besiedelten Aktivkohleschicht bei Gasverweilzeiten von 0,5 bis 1 Sek. nahezu vollständig sorbiert und biochemisch umgesetzt werden können.

Im Gegensatz zum Biowäscher ist erfindungsgemäß bei ähnlichen Betriebsbedingungen kein Regenerator erforderlich, in dem der gelöste Schadstoff biochemisch umgesetzt wird.

Gegenüber den bekannten Biofilterverfahren besitzt das erfindungsgemäße Verfahren den Vorteil, daß sich insbesondere bei biologisch schwer abbaubaren Luftverunreinigungen wesentlich höhere Raum/Zeit-Ausbeuten erreichen lassen Ferner ergaben sich unter sonst gleichen Bedingungen geringere Druckverluste als bei Biofiltern.

Für den Fachmann war es nicht vorauszusehen, daß mit dem vorgeschlagenen Verfahren die Raum-Zeit-Ausbeute k* um einen Faktor 20-100, gegenüber dem üblichen Biofilterverfahren, gesteigert werden kann (Maschinenmarkt, Würzburg 89 (1983) 77).

Neben den bereits genannten Vorteilen zeichnet sich das Verfahren durch eine extrem hohe Stabilität gegenüber schwer abbaubaren oder toxischen Substanzen oder Substratfluktuationen über längere Zeiträume, d. h. stoßweisen Substratzugaben oder -ausfällen, aus. Ferner ist bei dem System keine zusätzliche Sauerstoffversorgung vorzusehen. Sie geschieht durch den zu reinigenden Gasstrom. Die im Kreis gefahrene Flüssigkeit weist keine Eindickung auf, weil wachsendes Zellmaterial, d. h. sich vermehrende Zellen, an abgeriebenem feinen Trägermaterial adsorbiert wird und unter Flockenbildung im Vorratsbehälter schnell sedimentiert. Es kann deshalb einfach während des Betriebes entnommen

EP 0 147 721 B1

werden. Da die gesamten biologisch aktiven Schichten in beliebig hohem Maße befeuchtet werden können, sind pH- und Temperaturregelung, Mineral- und Spurenelementdosierung sowie für die Biologie regenerative Nährmedienzugaben unproblematisch.

Der pH-Wert in den biologisch aktiven Schichten läßt sich einfach dadurch einstellen, daß man dem befeuchtenden Flüssigkeitsstrom je nach Bedarf eine Säure oder eine Lauge zusetzt.

Abweichend von üblichen Waschverfahren ist mit dem erfindungsgemäßen Verfahren eine effektive Abscheidung von wenig wasserlöslichen Schadstoffen gegeben. Im allgemeinen sind dies unpolare Stoffe, die eine hohe Affinität zu Adsorbentien (z. B. Aktivkohle) zeigen.

Aufgrund des dünnen Flüssigkeitsfilms kann der Schadstoff durch Konfektion oder lokale Direktkontakte mit dem Adsorbens übertragen werden. Mit dem Verfahren wird eine langzeitliche quasikonstante und weitaus höhere Adsorptionsstromdichte erreicht als mit üblichen Adsorbentien.

Das Verfahren ist bei beliebigen, auch biologisch schwer abbaubaren Substanzen einsetzbar.

Das schadstoffadsorbierende Trägermaterial wird von der an der äußeren Oberfläche adsorbierten Bakterienmonokultur kontinuierlich regeneriert. D. h. die Bakterien auf der äußeren Oberfläche holen den Schadstoff aus den Poren des porösen Trägermaterials heraus.

In einer bevorzugten Ausführungsform wird das Trägermaterial vor der Kontaktierung mit der Bakteriensuspension mit einem Substrat beladen. Als Substrat dient ein von der jeweiligen Bakterienkultur leicht abbaubarer Schadstoff. Bei dieser Ausführungsform lagern sich die Bakterien nicht nur adsorptiv, wie bei der Direktbeschickung des Trägermaterials mit der Bakteriensuspension, sondern auch chemotaktisch an die Adsorbensoberfläche an, d. h. sie lagern sich besonders gerne an, weil das Substrat für sie Nahrung darstellt. Nachstehende Figuren und Beispiele dienen der weiteren Erläuterung der Erfindung.

Es zeigen :
Fig 1 eine graphische Darstellung der Zellbeladung des Trägers in Abhängigkeit von der Zeit ;
Fig. 2 eine Vorrichtung zur Durchführung des erfindungsgemäßen Verfahrens ;
Fig. 3 eine graphische Darstellung des Schadstoffabscheidegrades bei Langzeitbetrieb.
Die in den Figuren und Beispielen verwendeten Zeichen haben folgende Bedeutung :

AK = Aktivkohle
TS = Trockensubstrat
u = Umsatz
$Cg\alpha$ = Schadstoffeingangskonzentration
$Cg\omega$ = Schadstoffausgangskonzentration
$\dot{V}_g$ = Abgasstrom
$\dot{V}_l$ = Flüssigkeitsstrom
$V_k$ = Schüttvolumen
$\tau_g$ = Gasverweilzeit
$\tau_l$ = Flüssigkeitsverweilzeit
$\varepsilon_l$ = Flüssigkeitsvolumen
k* = Konstante
$\Delta_p$ = Druckverlust der Schicht

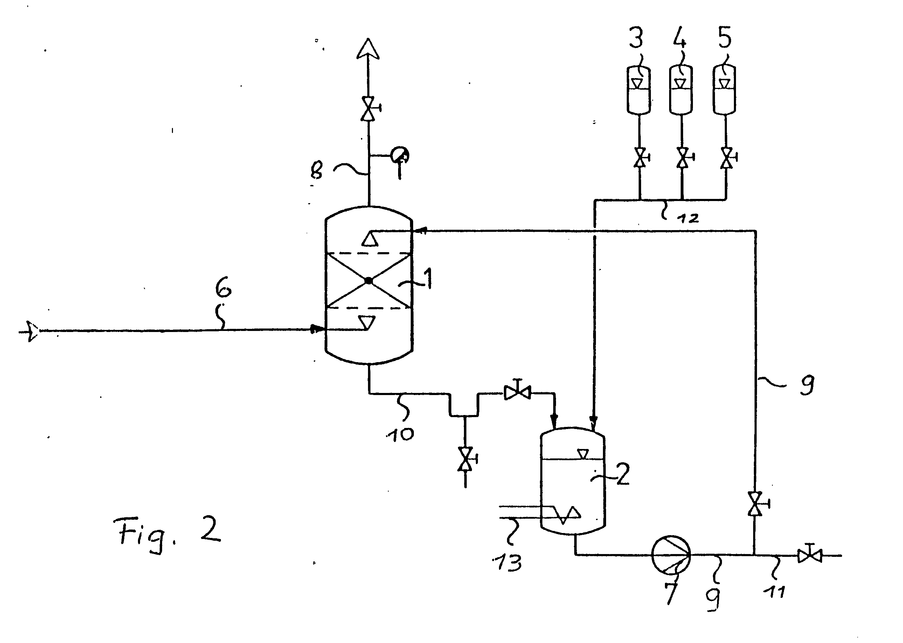

Gemäß Fig. 2 wird die biologisch aktive Schicht im Rieselbettreaktor (1) durch Abgaszuleitung (6) mit dem zu reinigenden Abgas beschickt. Je nach Schadstoffzusammensetzung liegen eine oder mehrere Schichten im Rieselbettreaktor vor. Aus dem Flüssigkeitsvorratsgefäß (2) wird mit Hilfe einer Umwälzpumpe (7), die zur Befeuchtung der auf der Schicht fixierten Bakterienkulturen erforderliche Flüssigkeit über Leitung (9) der Schicht (1) zugeführt und über Leitung (10) von der Schicht (1) im Kreislauf wieder zum Flüssigkeitsvorratsgefäß (2) zurückgeführt. In der hier gezeigten Anordnung erfolgt die Flüssigkeitszugabe im Gegenstrom zum Abgas. Jedoch kann dieselbe auch in umgekehrter Richtung im Gleichstrom erfolgen. Das Flüssigkeitsvorratsgefäß ist mit einem Thermostat (13) ausgestattet, um die Temperatur der Anlage zu regeln. Aus dem Säurevorratsgefäß (3) und dem Laugenvorratsgefäß (4) können über Dosierleitung (12) je nach Bedarf Säure oder Lauge dem System zugeführt werden. Flüssigkeitsfüllstandsregler (5) dient sowohl der Regelung des Flüssigkeitsstandes in (2) als auch als Vorratsund Dosiergefäß für Mineralstoffe und Spurenelemente, die zusammen mit der Flüssigkeit über Dosierleitung (12) und Flüssigkeitsvorratsgefäß (2) dem System zugeführt werden können. Der gereinigte Abgasstrom wird über Reingasleitung (8) von der biologischen Schicht (1) abgeführt. Über Leitung (11) kann verbrauchte oder überschüssige Flüssigkeit abgezogen werden.

Beispiel 1

Eine zellfreie Aktivkohleschicht (Körnung 2,5 mm) wurde bei ständiger Befeuchtung mit Minerallösung (Flüssigkeitsstrom $V_l = 4$ l/h) von einem Gasstrom mit einem Propionaldehydgehalt von 18 ppm (Gasstrom 160 l/h) bis zur Durchbruchsbeladung beschickt. Beim folgenden berieseln des Betts mit einer substratlimitierten Bakteriensuspension von Pseudomonas fluorescens (DSM 50090) (Zelldichte

4

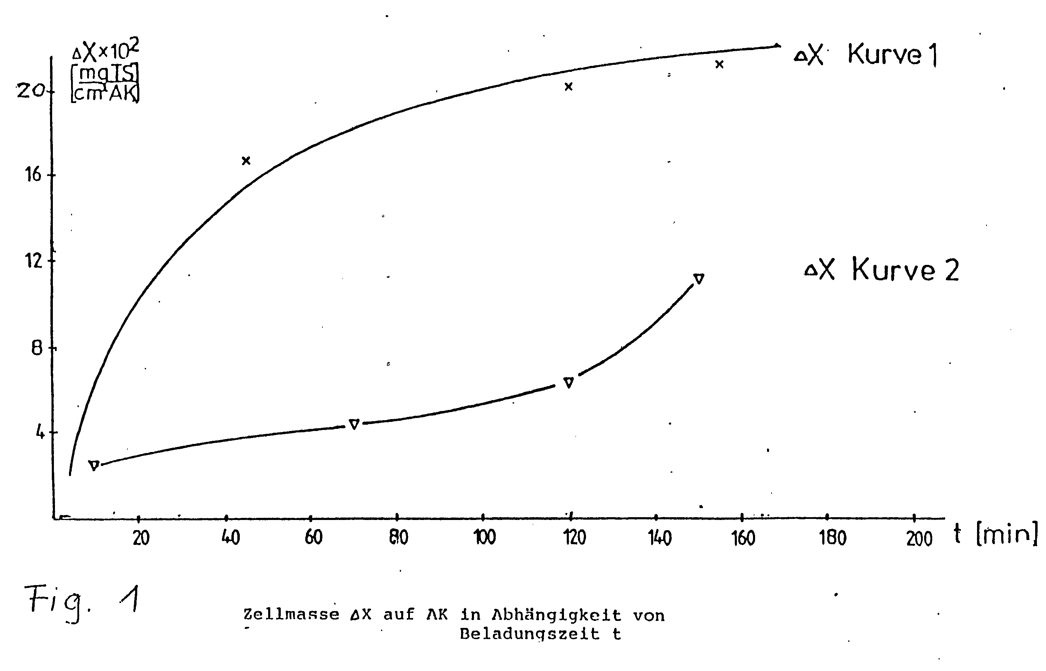

X = 0,725 g TS/l, $V_l$ = 8,8 l/h) stellte sich nach ca. 3 h ein Zellbeladungsgleichgewicht ein (Fig. 1, Kurve 1). Die äußere Oberfläche des Betts ist dann mit ca. 1 bis 2 Zellschichten belegt.

## Beispiel 2

Man verfuhr nach Beispiel 1, jedoch mit dem Unterschied, daß keine Vorbehandlung der Aktivkohle mit Propionaldehyd erfolgte, sondern die Bakteriensuspension direkt auf die Aktivkohle aufgebracht wurde. Die Bakterienbeschichtung ist dabei etwas geringer und erfolgt weniger schnell, wie aus Fig. 1, Kurve 2 ersichtlich ist. Zur Verwendung für die erfindungsgemäße Abgasreinigung eignet sich jedoch die auf diese Weise hergestellte Schicht genauso wie die in Beispiel 1 hergestellte Schicht. Jedoch ist die mit Kurve 1 dargestellte Schicht schneller verfügbar.

## Beispiel 3

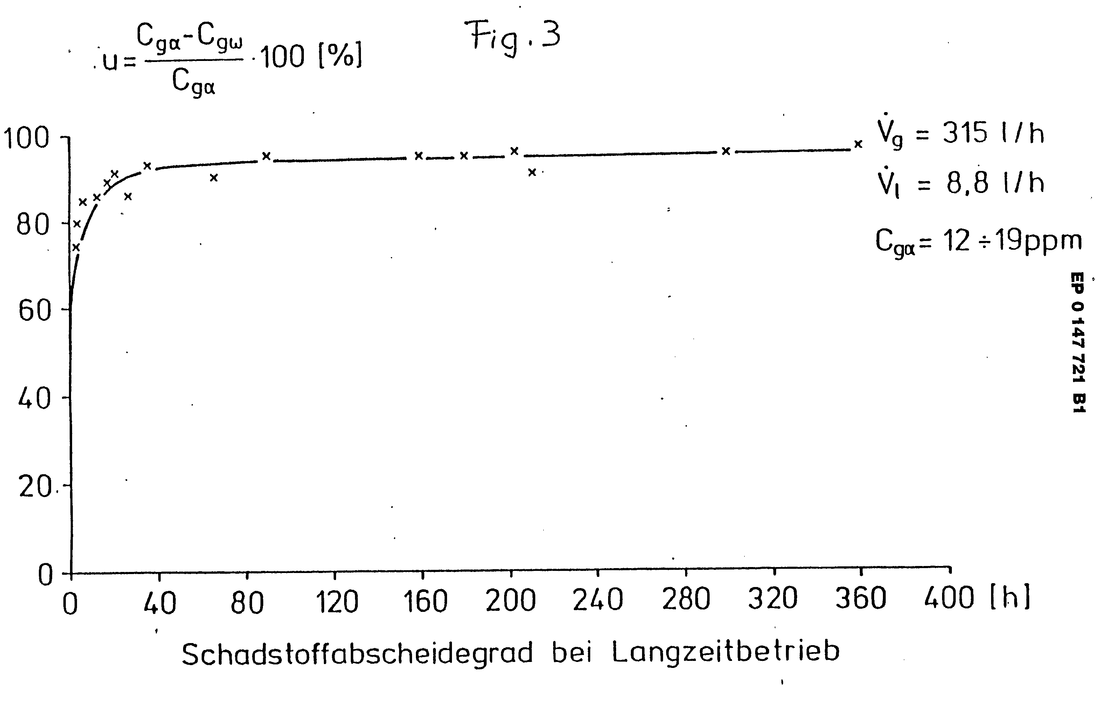

Die nach Beispiel 1 hergestellte Schicht wurde für die Abgasreinigung eingesetzt. Mit der in Fig. 2 dargestellten Anordnung wurde ein bis zu 18 ppm Propionaldehyd beladener Gasstrom fast vollständig in der Schüttung S gereinigt. Dabei wurde der Gasstrom bei einem Druckabfall von 1 mbar $\times$ 10$^1$ pro 10 mm Schütthöhe durch die mit Minerallösung berieselte Filterschicht geführt. Wie Fig. 3 zeigt, war das Filterbett schnell verfügbar und schied den Geruchsstoff, abhängig vom Gas- und Flüssigkeitsstrom, über die Versuchszeit von 15 Tagen mit steigender Tendenz ab.

## Beispiele 4 bis 9

Nachstehende Tabelle zeigt die Versuchsergebnisse der Beispiele 1 + 3 sowie weitere Beispiele für die Abgasreinigung bzw. Versuchsergebnisse mit meist aus Bodenproben isolierten und nach Beispiel 1 hergestellten fixierten Bakterienmonokulturen auf Aktivkohle und unterschiedlichen Schadstoffkomponenten.

Im Beispiel 7 sind in Spalte 3 Vergleichsdaten (in Klammern) vom Biowäscher unter analogen Versuchsbedingungen angegeben.

(Siehe Tabelle Seite 6 ff.)

EP 0 147 721 B1

Tabelle

| Reaktionssystem | X (Zellmasse) $[mg]$ | | $u = \dfrac{C_{g\kappa}-C_{g\psi}}{C_{g\kappa}}$ $[\%]$ | $\dot{V}_g$ $[1/h]$ | $\dot{V}_1$ $[1/h]$ | $T_g = \dfrac{V_k}{\dot{V}_g}$ $[s]$ | $T_1 = \dfrac{\varepsilon_1}{\dot{V}_1}$ $[s]$ | $k^{\ast} = \dot{V}_g/V_k$ $[h^{-1}]$ | $\Delta P$ mbar $\times 10^1$ |
|---|---|---|---|---|---|---|---|---|---|
| Pseudomonas fluorescens (DSM Nr. 50090) Propionaldehyd | ca. | 300 | 93,84 | 315 | 8,8 | 0,63 | 4,17 | 5662,4 | 6,5 |
| | | 300 | 89,00 | 372 | 3,6 | 0,53 | 7,00 | 6687,0 | 6,0 |
| | | 300 | 95,04 | 200,4 | 4,2 | 0,99 | 3,43 | 3602,4 | 4,5 |
| – Butanol | ca. | 300 | 27,2 | 372 | 8,0 | 0,53 | 4,6 | 6687,0 | 8 |
| – Ethylacetat | ca. | 300 | 11,65 | 257 | 8,2 | 0,70 | 4,5 | 4619,8 | 6 |

Tabelle (Fortsetzung)

| Reaktionssystem | X (Zellmasse) [mg] | $u = \dfrac{C_{g\alpha}-C_{gw}}{C_{g\alpha}}$ [%] | $\dot{V}_g$ [1/h] | $\dot{V}_l$ [1/h] | $\tau_g = \dfrac{V_k}{\dot{V}_g}$ [s] | $\tau_l = \dfrac{\varepsilon_l}{\dot{V}_l}$ [s] | $k^* = \dot{V}_g/V_k$ [h$^{-1}$] | $\Delta P$ mbar x10$^1$ |
|---|---|---|---|---|---|---|---|---|
| Rhodococcus sp. (DSM 43001) 6) Propionaldehyd | ca. 600 | 90,8 | 171,8 | 7,8 | 1,16 | 4,84 | 3075,67 | 6,5 |
| | 600 | 98,2 | 171,8 | 3,8 | 1,16 | 6,44 | 3075,67 | 2 |
| | 600 | 96,7 | 286,3 | 7,8 | 0,69 | 5,07 | 5146,50 | 7,5 |
| | 600 | 54,17 | 572,7 | 5 | 0,35 | 3,6 | 10282,2 | 3 |
| 7) - Butanol | ca. 600 | 95,1 (77,5)* | 171,8 | 4 | 1,16 | 5,85 | 3073,6 | 4 |
| | 600 | 94,5 (75,0)* | 343,6 | 7 | 0,58 | 6,27 | 6176,5 | 12 |
| | 600 | 61,1 (54,2)* | 572,7 | 7 | 0,35 | 6,42 | 10282,2 | 17 |
| 8) - Ethylacetat | ca. 600 | 98,9 | 171,6 | 3 | 1,16 | 8,4 | 3073,6 | 3 |
| | 600 | 91,2 | 286,3 | 5 | 0,69 | 5,76 | 5146,5 | 5 |
| | 600 | 66,4 | 572,7 | 8 | 0,35 | 6,07 | 10282,2 | 20 |
| 9) - Aceton | ca. 600 | 25,5 | 286,3 | 7 | 0,69 | 6,42 | 5146,5 | 5 |
| | 600 | 28,6 | 143,2 | 7 | 1,40 | 5,55 | 2574,1 | 4 |

* Binwäscher

EP 0 147 721 B1

Beispiel 10

Die Verfügbarkeit des biologisch aktiven Filterbetts bei längeren Substratausfällen (z. B. Produktionspausen) oder -spitzen (z. B. diskontinuierliche Produktion) im Abgas, wurde durch einen 30-stündigen Betrieb (wie Beispiel 3), jedoch ohne Schadstoff (Cg$\alpha$ = 0) geprüft. Bei normalem Einsatz (Cg$\alpha \neq$ 0) war der Filter wieder spontan mit 40 %iger verminderter und nach 1 Stunde mit anfänglicher Leistung (u = 95 %) für die Abscheidung des Propionaldehyds verfügbar.

Beispiel 11

Die Aktivitätsminderung der Schicht bei plötzlichen Betriebsstörungen oder -umstellungen, was meist eine spontane Änderung der Schadstoffzusammensetzung im Abgas bedingt, wurde durch die plötzliche Zugabe einer schwer abbaubaren Substanz (1 mg Aceton/l) in die Minerallösung getestet. Nach 2 Stunden konnte die Substanz nicht mehr nachgewiesen werden — die ursprüngliche Aktivität bei dem Betrieb nach Beispiel 3 war wieder erreicht.

## Patentansprüche

1. Verfahren zur Abscheidung gasförmiger organischer Schadstoffe, welche auch in Spuren vorliegen können, aus Abgasen durch biologische Oxidation mittels Bakterien, wobei man den ein oder mehrere organische Schadstoffe enthaltenden Gasstrom durch eine oder mehrere biologisch aktive Schichten in Rieselbettreaktoren führt und zur Benetzung der an der Oberfläche der Träger fixierten Bakterienkulturen einen Flüssigkeitsstrom während des Betriebes im Gleich- oder Gegenstrom im Kreis fährt, dadurch gekennzeichnet, dass die biologisch aktiven Schichten dadurch hergestellt werden, dass ein poröses, gegenüber dem Schadstoff adsorptives Trägermaterial mit hoher innerer Oberfläche, ausgewählt aus der Gruppe Aktivkohle, Zeolith und Silicagel mit einer schadstoffspezifischen Suspension einer Bakterienmono- und/oder -mischkultur in Kontakt gebracht wird.

2. Verfahren nach Anspruch 1, dadurch gekennzeichnet, daß man als Bakterienmischkultur Klärschlamm verwendet.

3. Verfahren nach Anspruch 1 oder 2, dadurch gekennzeichnet, daß man eine Schicht verwendet, bei der das Trägermaterial vor dem Kontaktieren mit der Bakteriensuspension mit einem durch die Bakterien abbaubaren Substrat beschickt wird.

4. Verfahren nach einem der vorstehenden Ansprüche, dadurch gekennzeichnet, daß man als Schicht eine mit einer Bakterienmonokultur belegte Aktivkohleschicht verwendet.

5. Verfahren nach einem der Ansprüche 1 bis 3, dadurch gekennzeichnet, daß man als Schicht mit verschiedenen Bakterienmonokulturen belegte Aktivkohleschichten verwendet, die definiert für die Schadstoffzusammensetzung zusammengestellt sind.

6. Verfahren nach einem der vorstehenden Ansprüche, dadurch gekennzeichnet, daß man einen Gasstrom verwendet, der als Schadstoffe Propionaldehyd, Butanol, Ethylacetat und/oder Aceton enthält.

## Claims

1. A process for eliminating gaseous organic pollutants, which can also be present in traces, from waste gases by biological oxidation using bacteria, wherein the gas stream containing one or more organic pollutants is led through one or more biologically active layers in fluidized bed reactors and, for wetting the bacterial cultures fixed on the surface of the carrier, a liquid stream is circulated in a cocurrent or counter-current during operation, characterised in that the biologically active layers are produced by bringing a porous, pollutant-adsorbing, carrier material, which has a high internal surface area and is selected from the group comprising activated carbon, zeolite and silica gel, into contact with a pollutant-specific suspension of a bacterial monoculture and/or mixed culture.

2. A process according to claim 1, characterised in that sewage sludge is used as bacterial mixed culture.

3. A process according to claim 1 or 2, characterised in that a layer is used in which the carrier material, before making contact with the bacterial suspension, is loaded with a substrate which can be decomposed by the bacteria.

4. A process according to one of the preceding claims, characterised in that a layer of activated carbon covered with a bacterial monoculture is used as layer.

5. A process according to one of claims 1 to 3, characterised in that layers of activated carbon covered with various bacterial monocultures, which are assembled in a defined manner for the pollutant composition, are used as layer.

6. A process according to one of the preceding claims, characterised in that a gas stream which contains propionaldehyde, butanol, ethyl acetate and/or acetone as pollutants is used.

**Revendications**

1. Procédé de séparation de substances nocives organiques, gazeuses, lesquelles peuvent également se présenter sous forme de traces, résultant de gaz libérés par oxydation biologique au moyen de bactéries ; dans lequel un flux gazeux contenant une ou plusieurs substances nocives organiques est guidé à travers une ou plusieurs couches biologiquement actives dans des réacteurs contenant un lit d'épuration, et dans lequel un flux liquide est conduit circulairement pendant le fonctionnement en co-courant ou contre-courant pour l'imprégnation des cultures de bactéries fixées à la surface supérieure du support ; caractérisé en ce que les couches biologiquement actives sont produites en amenant un support poreux qui absorbe les substances nocives, d'une très grande surface superficielle intérieure, choisi dans le groupe constitué par charbon actif, zéolithe et silicagel, et qui est mis en contact avec une suspension d'une culture monobactérienne et/ou d'un mélange de bactéries, spécifique à l'égard des substances nocives.

2. Procédé conforme à la revendication 1, caractérisé en ce qu'on utilise des boues de curage en tant que culture à mélange de bactéries.

3. Procédé conforme à l'une des revendications 1 ou 2, caractérisé par l'utilisation d'une couche pour laquelle le support est chargé avec un substrat dégradable par les bactéries, avant d'être mis en contact avec la suspension bactérienne.

4. Procédé conforme à l'une des revendications précédentes, caractérisé en ce qu'on utilise en tant que couche, une couche de charbon actif garnie d'une culture monobactérienne.

5. Procédé conforme à l'une des revendications 1 à 3, caractérisé par l'utilisation de couches de charbon actif garnies de différentes cultures monobactériennes qui sont associées d'une manière définie en fonction de la composition de la substance nocive.

6. Procédé conforme à l'une des revendications précédentes, caractérisé par l'utilisation d'un flux gazeux qui comprend comme substances nocives, de l'aldéhyde propionique, du butanol, de l'acétate d'éthyle et/ou de l'acétone.

$\Delta X \times 10^{2}$ $\left[\dfrac{mg\,TS}{cm^{2}\,AK}\right]$

$\Delta X$ Kurve 1

$\Delta X$ Kurve 2

t [min]

Zellmasse $\Delta X$ auf AK in Abhängigkeit von Beladungszeit t

Fig. 1

Fig. 2

3  4  5

8

6

1

12

9

10

2

13

7  9  11

EP 0 147 721 B1

# Fig.3

$$u = \frac{C_{g\alpha} - C_{g\omega}}{C_{g\alpha}} \cdot 100 \; [\%]$$

$\dot{V}_g = 315 \; l/h$

$\dot{V}_l = 8,8 \; l/h$

$C_{g\alpha} = 12 \div 19\,ppm$

Schadstoffabscheidegrad bei Langzeitbetrieb